(19) Europäisches Patentamt
European Patent Office
Office européen des brevets

(11) **EP 2 502 049 B1**

(12) **EUROPÄISCHE PATENTSCHRIFT**

(45) Veröffentlichungstag und Bekanntmachung des Hinweises auf die Patenterteilung:
**13.01.2021 Patentblatt 2021/02**

(21) Anmeldenummer: **10779740.9**

(22) Anmeldetag: **05.11.2010**

(51) Int Cl.:
*G01N 15/06* (2006.01)     *G01N 1/22* (2006.01)
*G01N 21/53* (2006.01)     *F23N 5/00* (2006.01)
*F23N 5/08* (2006.01)     *G01N 21/63* (2006.01)
*G01N 21/71* (2006.01)     *G01N 21/47* (2006.01)

(86) Internationale Anmeldenummer:
**PCT/EP2010/066890**

(87) Internationale Veröffentlichungsnummer:
**WO 2011/061069 (26.05.2011 Gazette 2011/21)**

(54) **VORRICHTUNG ZUR MESSUNG DER MASSENKONZENTRATION VON IM ABGAS VON FESTSTOFFVERBRENNUNGSVORRICHTUNGEN VORHANDENEM FEINSTAUB**

DEVICE FOR MEASURING THE MASS CONCENTRATION OF FINE DUST PRESENT IN THE EXHAUST GAS OF SOLID-FUEL COMBUSTION DEVICES

DISPOSITIF POUR MESURER LA CONCENTRATION MASSIQUE DE POUSSIÈRE FINE PRÉSENTE DANS LES GAZ D'ÉCHAPPEMENT DE DISPOSITIFS DE COMBUSTION DE MATIÈRE SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2009 DE 202009015777 U**
**18.12.2009 DE 102009055023**

(43) Veröffentlichungstag der Anmeldung:
**26.09.2012 Patentblatt 2012/39**

(73) Patentinhaber: **Vereta GmbH**
**37574 Einbeck (DE)**

(72) Erfinder:
• **RENGSHAUSEN, Detlef**
**37586 Dassel (DE)**
• **LÖDDING, Hubert**
**31275 Lehrte (DE)**
• **DUNKHORST, Wilhelm**
**32469 Petershagen (DE)**
• **KOCH, Wolfgang**
**31634 Steimbke (DE)**
• **WEBER, Alfred P.**
**38678 Clausthal-Zellerfeld (DE)**
• **QI, Fei**
**38678 Clausthal-Zellerfeld (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
**WO-A2-2007/000710     DE-A1- 10 307 805**
**FR-A1- 2 445 523     US-A- 3 854 045**
**US-A- 5 621 208     US-A- 5 745 293**
**US-A1- 2003 210 465     US-A1- 2004 115 838**
**US-B1- 6 965 240**

EP 2 502 049 B1

**Beschreibung**

Die Erfindung betrifft eine Vorrichtung zur Messung der Massenkonzentration von im Abgas von Feststoffverbrennungsvorrichtungen vorhandenem Feinstaub, mit mindestens einer Aerosolsensoranordnung und einer Auswerteeinrichtung, an die die Sensoranordnung angeschlossen ist.

Bedingt durch die Preisentwicklung auf dem Markt für Heizöl und Erdgas ist eine starke Zunahme der Verbrennung von Biomasse wie Holz- und Strohpellets, Hackschnitzel etc. zu verzeichnen und auch weiterhin zu erwarten. Nach amtlichen Angaben ist die Feinstaubemission aus Vorrichtungen und Anlagen, in denen Feststoffe verbrannt werden und die mehr als 15 kW Nennwärmeleistung aufweisen, zu mindestens 90 % auf die Verwendung von Holzbrennstoffen zurückzuführen. Aus Umweltsicht ist die Nutzung regenerativer, $CO_2$-neutraler Energie zu begrüßen. Allerdings sollte der klimarelevante Umweltnutzen nicht einhergehen mit einer gleichzeitigen zusätzlichen Gesundheitsbelastung für die Bevölkerung durch möglicherweise beträchtliche Feinstaubemissionen, die zu einer Erhöhung der Feinstaubkonzentration in der Atemluft des Menschen führt.

Für diese gelten seit einigen Jahren amtliche oder gesetzliche Grenzwerte. So darf beispielsweise in der Europäischen Union der Wert 40 Mikrogramm Feinstaub pro Kubikmeter Luft im Jahresmittel nicht überschritten werden, wobei an höchstens 35 Tagen im Jahr ein Wert von 50 Mikrogramm Feinstaub (Tagesmittel) überschritten werden darf.

Für die Zukunft ist zu erwarten, dass bei Holzfeuerungsanlagen unter anderem die Leistungsgrenze für überwachungspflichtige Anlagen reduziert und die Emissionsgrenzwerte für CO und Staub sogar deutlich reduziert werden sollen. Dies wird zu einem starken Anstieg der Zahl der Anlagen führen, die hinsichtlich ihrer Staubemission vom Schornsteinfeger zu überprüfen bzw. vom Heizungsfachmann einzustellen sind.

Vor diesem Hintergrund sind einfache, kostengünstige Messverfahren zur Vor-Ort-Bestimmung des Staubgehalts im Abgas wünschenswert.

Bei Ölheizungen wird für die Bestimmung der Russmassenkonzentration im Abgasstrom das so genannte Bosch-Zahlverfahren eingesetzt. Es beruht auf der Auswertung des Schwärzungsgrades eines Filterpapiers nach Beaufschlagung mit einem definierten Abgasvolumen. Das Bosch-Zahlverfahren kann bei Feststoffverbrennungsvorrichtungen nicht eingesetzt werden, weil es nur auf Russpartikel anspricht. Diese machen bei Holzfeuerungsanlagen anders als bei Ölheizungen nicht den Hauptbestandteil der Massenemission aus.

Ein bekanntes alternatives Verfahren basiert auf dem Anstieg des Druckabfalls eines Filters mit zunehmender Staubbeladung. Hier wird dem Abgas kontinuierlich ein Teilstrom entnommen und über einen beheizten Filter geleitet. Der Druckabfall über dem Filter wird während der Probenahme kontinuierlich gemessen.

Als gravierender Nachteil erwies sich im Praxistest die nicht eindeutige Korrelation der beiden Größen (Druckabfall und Massenkonzentration) unter realistischen Feldbedingungen. Weiterhin könnte es bei erheblich reduzierten Grenzwerten zu Problemen der Nachweisempfindlichkeit des Verfahrens kommen.

Weitere bekannte indirekte Verfahren beruhen auf der Lichtstreueigenschaft luftgetragener Partikel. Geräte, die Lichtextinktion oder Lichtstreuung am Partikelkollektiv im Abgas ausnutzen, werden seit langer Zeit für die kontinuierliche, stationäre Überwachung von Großfeuerungsanlagen eingesetzt. Diese Geräte sind in der Regel in den das Abgas führenden Kanal integriert. Zur Umrechnung der optischen Signale in Massenkonzentrationen wird ein anlagenspezifischer, konstanter Kalibrierfaktor, der hauptsächlich von der Korngrößenverteilung des Staubes abhängt, verwendet. Bei der Vermessung unterschiedlicher Verbrennungsvorrichtungen, wie Stückholzofen, Pelletofen etc. und wechselnden Verbrennungszuständen ist von unterschiedlichen Partikelgrößen und daher auch hier von einer starken situationsbedingten Variation des Kalibrierfaktors auszugehen.

Zu den bekannten optischen Verfahren zählen auch die Einzelpartikelzählverfahren. Hier werden die Partikel in einer kontinuierlichen Abgasprobe einzeln gezählt und durch Vermessen des Streulichtpulses größenklassiert. Aus Partikelgröße und -zahl kann dann die Massenkonzentration berechnet werden. Bei tragbaren Geräten ist die untere Detektionsgrenze bei Partikeln mit Durchmessern von ca. $0,3\,\mu m$ zu sehen. Messungen mit aufwendigen Laborgeräten an Holzverbrennungsanlagen zeigen jedoch, dass die meisten Partikel kleiner als $0,2\,\mu m$ sind und daher durch die optischen Partikelzähler nicht erfasst werden.

Zur Charakterisierung von Aerosolen aus Verbrennungsprozessen eignet sich auch das Verfahren der Photoemission. Hier wird die Aerosoloberfläche im Abgas durch UV-Licht ionisiert. Die Ladungskonzentration des Aerosols wird anschließend mit einem Elektrometer gemessen. Bei der Photoemission bestimmen die in Verbrennungsprozessen immer vorhandenen polyzyklischen aromatischen Kohlenwasserstoffe (PAK), die sich an die Aerosoloberfläche anlagern, das Signal. Daher hängt der Umrechnungsfaktor des elektrischen Signals auf Werte der Massenkonzentration sowohl von der Partikelgrößenverteilung als auch von der chemische Zusammensetzung des Aerosols ab. Es ist auch hier von großen Schwankungen je nach Abgassituation auszugehen.

Als direkte Verfahren zur Massenkonzentrationsmessung haben sich in der Umweltmesstechnik das beta-Strahlenabsorptionsverfahren und das Schwingfilterverfahren etabliert. Ersteres kommt für mobilen, standortungebundenen Einsatz nicht in Frage, da es eine radioaktive Quelle zur Erzeugung von beta-Strahlen verwendet. Das Schwingfilterverfahren (TEOM: tapered element oscillating micro balance) verlangt eine hochgenaue Temperierung der Sensorik und des zugeführten Messgutes, was sich unter praktischen Gesichtspunkten als Nachteil erweisen kann.

Diskontinuierliche gravimetrische Filterverfahren scheiden ebenfalls aus, weil eine Auswertung der Filterbelegung vor Ort durch Wägung nicht möglich ist. WO 2007/000710 A2 offenbart eine Vorrichtung zur Messung der Massenkonzentration von im Abgas von Feststoffverbrennungsvorrichtungen vorhandenem Feinstaub gemäß der Präambel des Anspruchs 1.

Es ist Aufgabe der vorliegenden Erfindung, eine Vorrichtung der eingangs genannten Art derart zu verbessern, dass sich auf genaue und zugleich einfachere Weise die Massenkonzentration von im Abgas von Feststoffverbrennungsvorrichtungen vorhandenem Feinstaub ermitteln lässt, indem insbesondere der Einfluss der Partikelgrößenverteilung auf die Auswertung reduziert wird, wodurch die Verwendung der Vorrichtung vor Ort und somit auch in einer tragbaren Ausführung möglich wird.

Zur Lösung dieser Aufgabe wird vorgeschlagen eine Vorrichtung zur Messung der Massenkonzentration von im Abgas von Feststoffverbrennungsvorrichtungen vorhandenem Feinstaub nach Anspruch 1.

Die Grundlage der Erfindung ist die Kombination von Aerosolphotoemission und Aerosolstreulichtphotometrie zur Messung der Massenkonzentration des Feinstaubs im Abgas von Feststofffeuerungsanlagen. Hierbei werden die unterschiedlichen Abhängigkeiten der Signale von der Partikelgröße ausgenutzt und damit der Einfluss der Partikelgrößenverteilung auf die Umrechnung erheblich reduziert.

Bei der Ausnutzung der Signale von dem mindestens einen Aerosolstreulichtsensor und dem mindestens einen Aerosolfotoemissionssensor der Aerosolsensoranordnung ist zu erwarten, dass die gegenläufigen Charakteristiken der Sensitivität bei Variation des mittleren Partikeldurchmessers die Etablierung einer einheitlichen Umrechnungsprozedur erlauben und die daraus ermittelten Kalibrierparameter dann nicht mehr stark von der Größenverteilung des Messgutes abhängen. Damit kann dann auf eindeutige Weise eine für Holzverbrennungsprozesse allgemein gültige Zuordnung des Rechenwertes aus den elektrischen Signalen zur Aerosolmassenkonzentration getroffen werden.

So wird in einer Ausführung, die nicht Teil der Erfindung ist, ein tragbares Verfahren zur Messung der Massenkonzentration des im Abgas von Feststoffverbrennungsvorrichtungen vorhandenen Feinstaubs ermöglicht. Hierbei wird dem Abgasrohr kontinuierlich ein kleiner Abgasteilstrom entnommen und zwei auf unterschiedlichen Messprinzipien (Aerosolsphotoemission und Aerosolstreulichtphotometrie) beruhenden Staubsensoren zugeführt. Aus den Messsignalen wird die Massenkonzentration des Feinstaubs im Abgasstrom berechnet. Das Verfahren kann angewendet werden für die Überwachung von Emissionsgrenzwerten von feinstauberzeugenden Verbrennungsvorrichtungen, die Einstellung der Anlagen für eine optimale Verbrennung sowie prinzipiell auch für eine kontinuierliche Anlagensteuerung.

Bevorzugte Ausführungen und Weiterbildungen der Erfindung sind in den abhängigen Ansprüchen angegeben.

Nachfolgend wird ein bevorzugtes Ausführungsbeispiel der Erfindung anhand der beiliegenden Zeichnungen näher erläutert. Es zeigen:

Fig. 1 schematisch nach Art eines Blockschaltbildes den Aufbau einer Vorrichtung zur Messung der Massenkonzentration von im Abgas von Feststoffverbrennungsvorrichtungen vorhandenem Feinstaub gemäß einer bevorzugten Ausführung;

Fig. 2 schematisch in vergrößerter blockschaltbildartiger Darstellung eine Abgasprobenahme- und Konditionieranordnung, welche Teil der in Fig. 1 gezeigten Vorrichtung ist;

Fig. 3 schematisch in vergrößerter Längsschnittansicht eine bevorzugte Ausführung eines Streulichtsensors, welcher in der in Figur 1 gezeigten Vorrichtung verwendet wird; und

Fig. 4 schematisch in vergrößerter blockschaltbildartiger Darstellung der Aufbau eines Photoemissionssensors, welcher bevorzugt in der in Figur 1 gezeigten Vorrichtung verwendet wird.

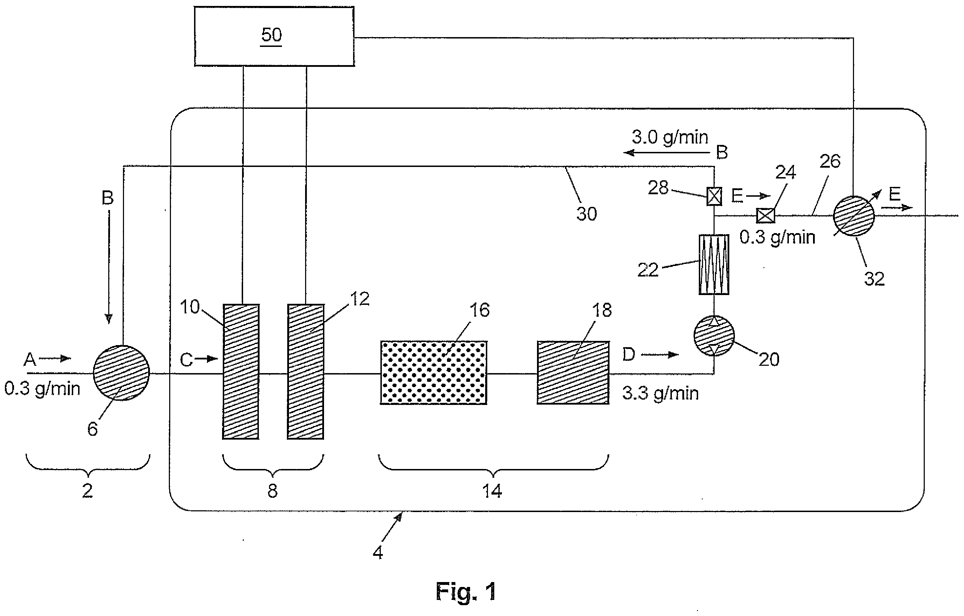

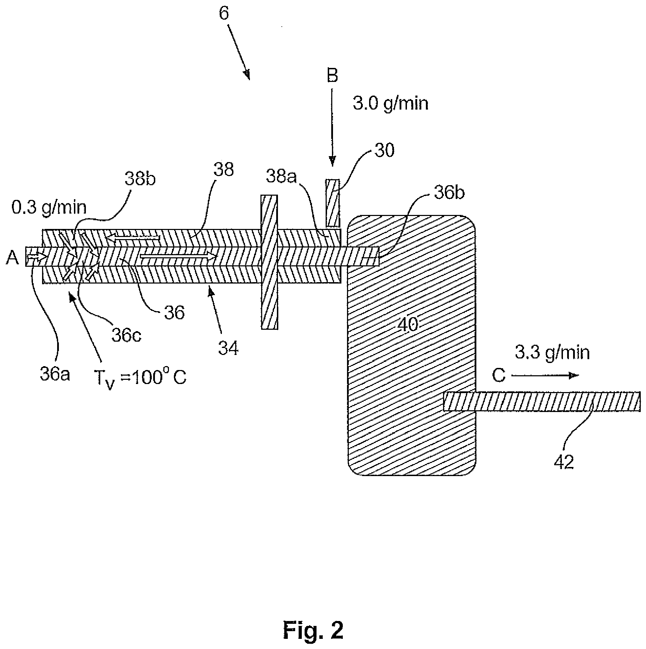

Im Folgenden wird anhand der Figuren 1 und 2 ein bevorzugtes Ausführungsbeispiel für den mobilen Einsatz zur Messung der Feinstaubkonzentration in einem (in den Figuren nicht dargestellten) Abgasrohr von kleinen Holzverbrennungsvorrichtungen beschrieben. Die Messung erfolgt durch Probenahme aus dem heißen Abgasstrom. Aufgrund der Inkompatibilität der im beschriebenen Ausführungsbeispiel verwendeten optoelektronischen Sensoren mit den teilweise sehr hohen Abgastemperaturen (bis 700°C) und dem hohen Wassergehalt muss vor der Zuführung des Messgutes zu diesen Sensoren eine Konditionierung, d.h. Abkühlung und Entfeuchtung, der Abgasprobe erfolgen. Somit besteht das Messsystem im dargestellten Ausführungsbeispiel aus zwei Komponenten, und zwar einer Abgasprobenahme- und Konditionieranordnung 2 und einer Messanordnung 4.

Den Geräteaufbau und den Messgasfluss zeigt Fig. 1. Die Abgasprobenahme- und Konditionieranordnung 2 weist eine Konditioniereinheit 6 auf, in der ein kleiner Probenahmestrom A aus heißem Abgas mit kälterer, trockener Luft B verdünnt wird. Die Verdünnung bewirkt eine Abkühlung der Abgasprobe sowie im beschriebenen Ausführungsbeispiel auch eine Herabsetzung des Wassertaupunkts von etwa 100°C im Rohgas auf unter 30°C in einem entsprechend verdünnten Messgutstrom C. Dieser wird dann einer Aerosolsensoranordnung 8 zugeführt, welche einen Aerosolstreulichtsensor 10 und einen in Reihe stromabwärts liegenden Aerosolphotoemissionssensor 12 aufweist. Der Photoemissionssensor 12 enthält einen in der Figur 1 nicht dargestellten Partikelfilter, der alle Partikel aus dem Messgut entfernt.

Durch eine Absorptionsanordnung 14 erfolgt eine Absorption des Wasserdampfes sowie der gasförmigen Kohlenwasserstoffe und Säuren, wobei die Absorptionsanordnung 14 im dargestellten Ausführungsbeispiel eine mit Silikagel gefüllte erste Kartusche 16 und eine hinter dieser stromabwärts in Reihe liegende und mit Aktivkohle gefüllte zweite Kartusche 18 aufweist.

Die Ansaugung übernimmt eine Drehschieberpumpe 20. Druckseitig sind im dargestellten Ausführungsbeispiel zunächst ein Feinpartikelfilter 22 und stromabwärts von diesem eine Aufteilungseinrichtung vorgesehen, die den Massenstrom D gemäß einem angestrebten Verdünnungsverhältnis aufteilt. Im vorliegenden Beispiel wird der Förderstrom von 3,3 g/min aufgeteilt durch eine erste Kapillare 24 in einen ersten Teilstrom E von 0,3 g/min, welcher durch eine Auslassleitung 26 nach außen abgeblasen wird, und durch eine zweite Kapillare 28 in einen zweiten Teilstrom von 3,0 g/min, der in eine zur Konditioniereinheit 6 führenden Rückführleitung 30 geleitet wird und zur Verdünnung dient. In die Auslassleitung 26 ist ein Massenstromsensor 32 geschaltet. Der hier gemessene Teilstrom E (trockene Luft) entspricht im Wesentlichen genau dem aus dem Abgasrohr eingangsseitig abgesaugten Probenahmemassenstrom A. Der Verdünnungsfaktor hat in diesem Beispiel den festen Wert 10. Durch Austausch der Kapillaren 24, 28 können auch andere Verdünnungsverhältnisse eingestellt werden.

Die Konditioniereinheit 6 ist im Detail vergrößert in Fig. 2 dargestellt. Die Messprobe wird über eine Probenahmelanze 34 dem heißen Abgas entnommen. Die Lanze 34 ist als Koaxialrohr aus hitze- und säurebeständigem Metall ausgebildet, welches einen inneren Mantel und einen äußeren Mantel aufweist. Der innere Mantel bildet ein erstes Rohr 36, durch dessen Einlass 36a der Probenahmemassenstrom A eintritt. Der innere Mantel und der äußere Mantel begrenzen ein zweites Rohr 38, an dessen Eingang 38a die Rückführleitung 30 (Fig. 1) angeschlossen ist. Wie ferner Fig. 2 erkennen lässt, kommuniziert der Ausgang 38b des zweiten Rohrs 38 mit dem ersten Rohr 36 über zusätzliche Verbindungsöffnungen 36c im Bereich des Einlasses 36a, wo sich der Probenahmemassenstrom A mit dem über die Rückführleitung 30 herangeführten Verdünnungsstrom B vermischt. Demnach wird durch das erste Rohr 36 in der Probenahmelanze 34 der Fördermassenstrom C (der größer ist als der Verdünnungsmassenstrom B) abgesaugt. Die Differenz wird dem Abgas als Probe entnommen. Die Vermischung des Probenahmemassenstroms A und des Verdünnungsmassenstroms B findet am vorderen Ende der Lanze 34 statt. Hier hat sich der Verdünnungsmassenstrom schon so weit erhitzt, dass es bei dem Mischprozess auch lokal nicht zu einer Wasserdampfübersättigung und -kondensation kommt.

Schließlich wird der Massenstrom C noch in einem Abkühlbehälter 40 auf niedrige Temperaturen abgekühlt, bevor er dann über eine Leitung 42 der Aerosolsensoranordnung 8 in der Messanordnung 4 zugeführt wird (Fig. 1).

Wie bereits erwähnt, weist die Aerosolsensoranordnung 8 einen Streulichtsensor 10 und einen Photoemissionssensor 12 auf.

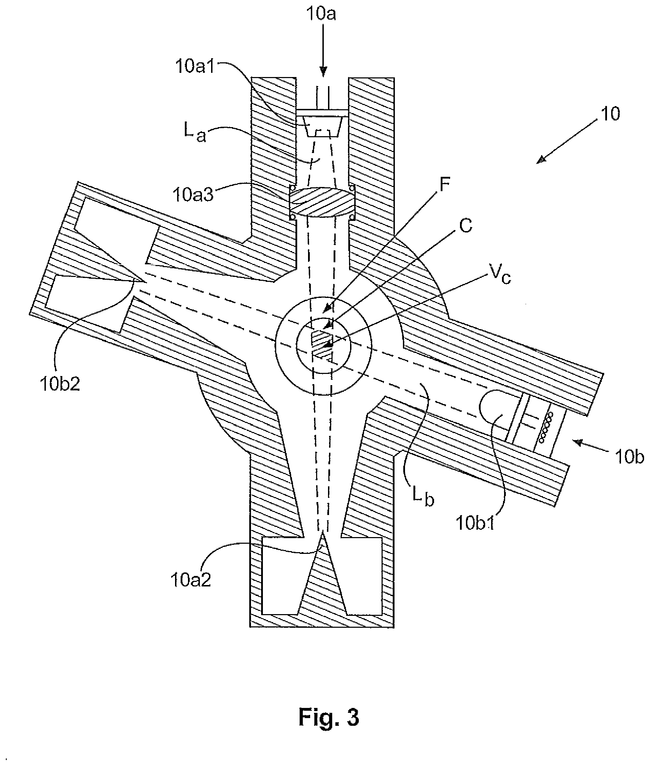

Beim Streulichtsensor 10 beleuchtet das polarisierte Licht einer intensitätsstabilisierten Laserdiode ein durch den optischen Strahlengang definiertes Messvolumen. Das Streulicht aller Aerosolpartikeln, die sich in diesem Messvolumen befinden, wird unter einem Winkel von 90° von einem Halbleiterphotodetektor erfasst. In Figur 3 ist in vergrößerter Längsschnittansicht eine bevorzugte Ausführung des Streulichtsensors 10 abgebildet, welche in der in Figur 1 gezeigten Vorrichtung verwendet wird und aus zwei Sensorabschnitten 10a und 10b besteht. Der erste Sensorabschnitt 10a weist eine erste Lichtquelle 10a1 in Form einer Laserdiode und einen ersten Photodetektor 10a2 auf, der gegenüber der ersten Lichtquelle 10a1 diametral in Bezug auf den durch den Streulichtsensor 10 geleiteten Massenstrom C gegenüberliegt, welcher in Figur 3 im Querschnitt und somit rechtwinklig zur Bildbetrachtungsebene von Figur 3 verlaufend abgebildet und im dargestellten Ausführungsbeispiel von einer Luftstromhülle F umgeben ist. Ferner weist der erste Sensorabschnitt 10a im dargestellten Ausführungsbeispiel im Strahlengang noch eine Linse 10a3 auf, durch die der von der ersten Lichtquelle 10a1 erzeugte Lichtstrahl $L_a$ auf den ersten Photodetektor 10a2 fokussiert wird. Der zweite Sensorabschnitt 10b weist ebenfalls eine zweite Lichtquelle 10b1 und einen in Bezug auf den Massenstrom C diametral gegenüberliegenden zweiten Photodetektor 10b2 auf. Wie Figur 3 erkennen lässt, ist dabei die gesamte Anordnung so getroffen, dass sich der von der ersten Lichtquelle 10a1 erzeugte erste Lichtstrahl $L_a$ im Massenstrom C mit dem von der zweiten Lichtquelle 10b1 erzeugten zweiten Lichtstrahl $L_b$ schneidet, wobei die Schnittfläche das Messvolumen $V_c$ abbildet. Die Polarisationsrichtung ist bei dem einen Sensorabschnitt parallel zur optischen Ebene (aufgespannt durch den Strahlengang des einfallenden Lichts und des zum Photodetektor gestreuten Lichts) und bei dem anderen Sensorabschnitt senkrecht dazu orientiert. Die Streulichtsignale stehen nach Verstärkung als Spannungssignal zur Verfügung. Das Signal ist direkt proportional zur Massenkonzentration des Aerosols im Messvolumen. Das zu messenden Aerosol wird verlustfrei zentral durch die Streulichtsensoren geleitet und steht dann der Vermessung durch den Photoemissionssensor 12 zur Verfügung.

Im Photoemissionssensor 12 werden die festen Aerosolpartikel durch eine UV-Lampe elektrisch geladen (Oberflächenionisation) und danach durch eine Filter in einem Faraday'schen Käfig abgeschieden. Die Ladung wird abgegeben, und es fließt ein geringer Strom, der elektrometrisch gemessen wird. Hinter dem Photoemissionssensor 12 ist die Messprobe dann partikelfrei.

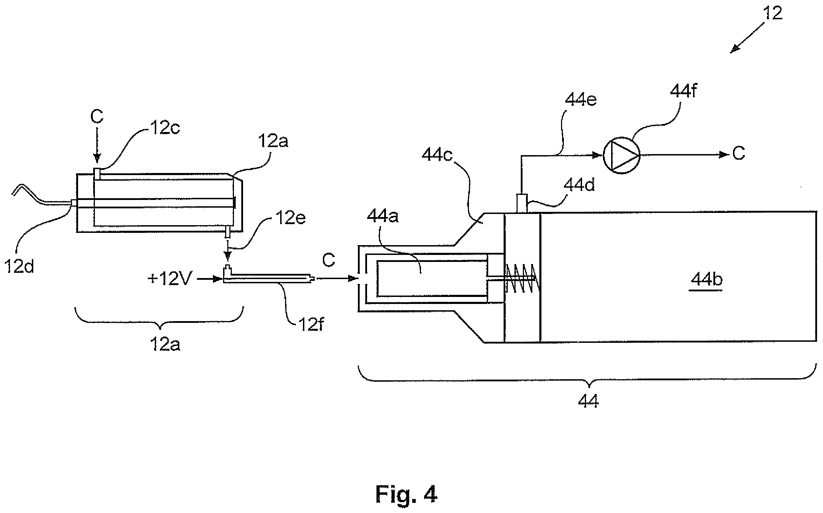

Eine bevorzugte Konstruktion des im beschriebenen Ausführungsbeispiel verwendeten Photoemissionssensors 12 ist schematisch in Figur 4 gezeigt. Der dort dargestellte Photoemissionssensor 12 weist eine Photoemissionsanordnung 12a mit einer Beleuchtungskammer 12b auf. Durch einen Einlass 12c wird der vom Streulichtsensor 10 kommende Massenstrom C in die Beleutungskammer 12b geleitet und dort von einer Ultraviolettlampe 12d bestrahlt, bevor er die Beleutungskammer 12b durch einen Auslass 12e verlässt. Stromabwärts von dem Auslass 12e der Seleutungskammer 12b wird der Massenstrom C durch eine Elektronen-Absaug-Elektode 12f geleitet. Anschließend wird der Massenstrom C in eine nachgeschaltete Filteranordung 44 befördert, die einen Messfilter 44a, in den der Massenstrom zunächst gelangt, einen sich an den Messfilter 44a anschließenden Ladungsverstärker 44b und ein Elektrometer 44c aufweist. Am Ladungsverstärker 44b ist ein Auslass 44d vorgesehen, durch den der dann partikelfreie Massenstrom C in eine zur Absorptionsanordnung 14 (Fig.1) führende Leitung 44e eintritt, in welcher sich eine Pumpe 44f befindet.

Im dargestellten Ausführungsbeispiel gemäß Figur 4 sind die Photoemissionsanordnung 12a und die Filteranordnung 44 Teil eines Photoemissionssensors 12, der somit eine gemeinsame Einheit bildet. Alternativ ist es aber auch denkbar, die Filteranordnung 44 als eigenständige Einheit zu verwenden, die dem Photoemissionssensor nachgeschaltet ist, welcher in einem solchen Fall nur von der Photoemissionsordnung 12a gebildet wird.

Wie Fig. 1 ferner erkennen lässt, sind die Sensoren 10, 12 und 32 an einer Auswerteeinheit 50 angeschlossen, in der die Signale von den Sensoren verarbeitet werden.

Die Photoemission beruht auf der Anlagerung von PAK an die Aerosoloberfläche. Für die Menge, $m_i$ der ionisierbaren, das Signal bestimmenden, angelagerten Substanz ergibt sich:

$$m_i = \int_0^\infty dx \; x^\eta n(x)$$

wobei x die Größe eines Partikels und $n(x)$ die Anzahlgrößenverteilung des Aerosols ist und der Exponent $\eta$ je nach Partikelgröße Werte zwischen 1 und 2 annehmen kann. Für die Empfindlichkeit, $E_{APE}$ des Photoemissionssignals bezogen auf die Massenkonzentration

$$E_{APE} = \frac{\int_0^\infty dx \; x^\eta n(x)}{\int_0^\infty dx \; x^3 n(x)} \quad (1 < \eta < 2)$$

ergibt sich also eine Zunahme mit abnehmender mittlerer

Partikelgröße, $\bar{x}$, des Abgasaerosols

$$E_{APE} \approx \frac{1}{\bar{x}^{3-\eta}}, \quad (3-\eta > 0).$$

Beim Streulichtmessverfahren steigt für Partikeln im Bereich der sog. Rayleigh-Streuung und dem unmittelbar benachbarten Mie-Streubereich das Intensitätssignal

$$I_{ASP} = \int_0^\infty dx \; x^\kappa n(x) \quad (\kappa \cong 6),$$

mit zunehmendem Partikeldurchmesser viel stärker an als die Partikelmasse, so dass die massebezogene Streulichtempfindlichkeit mit abnehmender mittlerer Partikelgröße abnimmt:

$$E_{ASP} \approx \bar{x}^{\kappa-3}, \quad (\kappa - 3 -> 0).$$

Durch Ausnutzung der Signale von beiden Sensoren 10, 12 ist insbesondere bei der linearen Überlagerung

$$E_R = A_1 \, E_{APE} + A_2 \, E_{ASP}$$

zu erwarten, dass die gegenläufigen Charakteristiken der Sensitivität bei Variation des mittleren Partikeldurchmessers die Etablierung einer einheitlichen Umrechnungsprozedur erlauben und die daraus ermittelten Kalibrierparameter dann nicht mehr stark von der Größenverteilung des Messgutes abhängen. Dabei bilden $A_1$ und $A_2$ aus Messungen unter Verwendung von Referenzwerten zu ermittelnde Steigungskoeffizienten oder proportionale Koeffizienten für eine Umrechnung der Spannungssignale von den Sensoren 10, 12 (beispielsweise wurden bei Untersuchungen an unterschiedlichen Holzöfen unter Verwendung verschiedener Brennstoffe und bei verschiedenen Abbrandsituationen für die Umrechnung der Spannungssignale von den Sensoren 10, 12 die Werte $A_1$ = 8mg/m³/V und $A_2$ = 61 mg/m₃/V verwendet, wobei in diesem Zusammenhang ausdrücklich betont sei, dass auch die Verwendung von anderen geeigneten Werten für $A_1$ und $A_2$, insbesondere in Abhängigkeit von den spezifischen Messsituationen, ohne weiteres denkbar ist). Damit kann dann auf eindeutige Weise eine für Holzverbrennungsprozesse allgemein gültige Zuordnung des Rechenwertes aus den elektrischen Signalen von den Sensoren 10, 12 zur Aerosolmassenkonzentration getroffen werden.

Diese Überlegungen gelten insbesondere, wenn die Partikel im Abgas kleiner als etwa 1 μm sind, was bei den Holzfeuerungen wie insgesamt bei Verbrennungsrauchen auch im Wesentlichen der Fall ist.

Eine zusätzliche, grobe Information über die Partikelgröße insbesondere im Partikelgrößenbereich <

0,2 μm erhält man, wenn bei der Aerosolphotometrie das Streulicht hinsichtlich seiner Polarisationsrichtung relativ zur optischen Ebene unterschieden wird. Das Intensitätsverhältnis von senkrecht zu parallel polarisiertem Licht ist in diesem Partikelgrößenbereich stark von der Partikelgröße abhängig. Für einen Streuwinkel von 90° gilt:

$$\Gamma_{pol} = \frac{I_{ASP,II}}{I_{ASP,\perp}} = \begin{cases} 0 & \text{für } \bar{x} \ll \lambda \\ \\ 1 & \text{für } \bar{x} \gg \lambda \end{cases}$$

wobei $\lambda$ die Wellenlänge des Streulichts bedeutet.

Die Funktion des Massenstromsensors 32 beruht auf der Messung der Temperaturdifferenz, die beim Aufheizen des Massenstroms E durch eine definierte Heizleistung erzielt wird.

## Patentansprüche

1. Vorrichtung zur Messung der Massenkonzentration von im Abgas von Feststoffverbrennungsvorrichtungen vorhandenem Feinstaub, mit mindestens einer Aerosolsensoranordnung (8) und einer Auswerteeinrichtung (50), an die die Aerosolsensoranordnung (8) angeschlossen ist, wobei die Aerosolsensoranordnung (8) mindestens zwei Sensoren (10, 12) aufweist, von denen der eine Sensor (10) mindestens ein Aerosolstreulichtsensor und der andere Sensor (12) mindestens ein Aerosolfotoemissionssensor ist, und die Auswerteeinrichtung (50) ausgebildet ist, die Signale von den Sensoren (10, 12) der Aerosolsensoranordnung (8) zur Ermittlung der Massenkonzentration gleichzeitig zu verwenden und auszuwerten, **dadurch gekennzeichnet, dass** stromaufwärts vor der Aerosolsensoranordnung (8) eine Konditionierungseinrichtung (6), die einen ersten Eingang (36a) zur Aufnahme eines Probenahmestromes (A), einen zweiten Eingang (38a) und einen zur Aerosolsensoranordnung (8) führenden Ausgang (36b) aufweist, und stromabwärts hinter der Aerosolsensoranordnung (8) eine Aufteilungseinrichtung (24, 28), die einen mit dem Ausgang der Aerosolsensoranordnung (8) verbundenen Eingang, einen ersten in die Umgebung führenden Ausgang (26) und einen zum zweiten Eingang (38a) der Konditionierungseinrichtung (6) führenden zweiten Ausgang (30) aufweist, vorgesehen ist, wobei die Aufteilungseinrichtung (24, 28) den Massestrom (D) in einem vorgegebenen Verhältnis auf ihre beiden Ausgänge (26, 30) verteilt, das Verhältnis in der Aufteilungseinrichtung (24, 28) so gewählt ist, dass der aus dem ersten Ausgang (26) der Aufteilungseinrichtung austretende Teilstrom (E) im Wesentlichen dem in den Eingang (36a) der Konditionierungseinrichtung (6) eingegebenen Probenahmestrom (A) entspricht, und am ersten Ausgang (26) der Aufteilungseinrichtung (24, 28) ein an die Auswerteeinrichtung (50) angeschlossener Massenstromsensor (32) angeordnet ist.

2. Vorrichtung nach Anspruch 1, **dadurch gekennzeichnet, dass** die Sensoren (10, 12) der Aerosolsensoranordnung (8) in Reihe hintereinander geschaltet sind und bevorzugt der mindestens eine Aerosolfotoemissionssensor (12) stromabwärts hinter dem mindestens einen Aerosolstreulichtsensor (10) angeordnet ist.

3. Vorrichtung nach mindestens einem der vorangegangenen Ansprüche, **gekennzeichnet durch** einen Partikelfilter (44), der bevorzugt stromabwärts hinter der Aerosolsensoranordnung vorgesehen ist.

4. Vorrichtung nach den Ansprüchen 2 und 3, **dadurch gekennzeichnet, dass** der stromabwärts letzte Sensor (12) der Aerosolsensoranordnung (8) zusätzlich den Partikelfilter (44) aufweist.

5. Vorrichtung nach mindestens einem der Ansprüche 3 oder 4, **dadurch gekennzeichnet, dass** der Partikelfilter (44) eine Ionisierungseinrichtung (12d), vorzugsweise eine Ultraviolettlampe, zur Oberflächenionisation der Partikel und eine elektrisch entgegengesetzt geladene Partikelauffangeinrichtung (44b), vorzugsweise ein Faraday'scher Käfig, zum Auffangen und Abscheiden der Partikel aufweist, wobei bevorzugt mindestens ein Aerosolfotoemissionssensor (12) den Partikelfilter (44) sowie eine Lichtquelle (12d) aufweist, die gleichzeitig als Ionisationseinrichtung vorgesehen ist.

6. Vorrichtung nach mindestens einem der vorangegangenen Ansprüche, **dadurch gekennzeichnet, dass** die Aerosolsensoranordnung zwei Aerosolstreulichtsensoren (10a, 10b) aufweist, deren Polarisationsrichtungen etwa rechtwinklig zueinander orientiert sind, wobei vorzugsweise die Polarisationsrichtung des einen Aerosolstreulichtsensors etwa parallel zur optischen Ebene, die durch den Strahlengang des von einer Lichtquelle einfallenden Lichtes und den Strahlengang des zu einem Detektor gestreuten Lichtes aufgespannt ist, orientiert ist.

7. Vorrichtung nach mindestens einem der vorangegangenen Ansprüche, **dadurch gekennzeichnet, dass** die Auswerteeinrichtung (50) Mittel zur, vorzugsweise linearen, Überlagerung der Signale von den Sensoren (10, 12) der Aerosolsensoranordnung (8) aufweist, wobei bevorzugt die Mittel zur Überlagerung mindestens einen Addierer aufweisen.

**8.** Vorrichtung nach mindestens einem der vorangegangenen Ansprüche, **dadurch gekennzeichnet, dass** stromabwärts hinter der Aerosolsensoranordnung (8) eine, vorzugsweise Silikagel enthaltende, Wasserdampfabsorptionseinrichtung (16) vorgesehen ist.

**9.** Vorrichtung nach mindestens einem der vorangegangenen Ansprüche, **dadurch gekennzeichnet, dass** stromabwärts hinter der Aerosolsensoranordnung (8) eine, vorzugsweise Aktivkohle enthaltende, Absorptionseinrichtung (18) zur Absorption von gasförmigen Kohlenwasserstoffen und/oder Säuren vorgesehen ist.

**10.** Vorrichtung nach den Ansprüchen 8 und 9, **dadurch gekennzeichnet, dass** die Absorptionseinrichtung (18) zur Absorption von gasförmigen Kohlenwasserstoffen und/oder Säuren stromabwärts hinter der Wasserdampfabsorptionseinrichtung (16) vorgesehen ist.

**11.** Vorrichtung nach Anspruch 9 oder 10, **dadurch gekennzeichnet, dass** die Aufteilungseinrichtung (24, 28) stromabwärts hinter der Absorptionseinrichtung (8) vorgesehen ist.

**12.** Vorrichtung nach mindestens einem der vorangegangenen Ansprüche, **dadurch gekennzeichnet, dass** die Aufteilungseinrichtung eine Anordnung aus Kapillaren aufweist, die zur Einstellung eines gewünschten Aufteilungsverhältnisses austauschbar sind, wobei vorzugsweise eine erste Kapillare (24) am ersten Ausgang und eine zweite Kapillare (28) am zweiten Ausgang (30) vorgesehen ist.

**13.** Vorrichtung nach mindestens einem der vorangegangenen Ansprüche, **dadurch gekennzeichnet, dass** der Massenstromsensor (32) ein Heizelement zum Aufheizen des aus dem ersten Ausgang (26) austretenden Teilmassestromes (E) mittels einer definierten Heizleistung und ein Messelement zur Messung der Temperaturdifferenz aufweist.

**14.** Vorrichtung nach mindestens einem der vorangegangenen Ansprüche, **dadurch gekennzeichnet, dass** stromaufwärts vor der Aerosolsensoranordnung (8) mindestens ein Kühlelement zur Abkühlung des in die Aerosolsensoranordnung (8) geleiteten Massestromes (C) vorgesehen ist.

**15.** Vorrichtung nach Anspruch 14, **dadurch gekennzeichnet, dass** die Konditionierungseinrichtung (6) das mindestens eine Kühlelement aufweist.

**16.** Vorrichtung nach Anspruch 15, **dadurch gekennzeichnet, dass** die Konditionierungseinrichtung (8) eine Probenahmelanze (34) aufweist, die als Doppel- oder Mehrfachrohranordnung (36, 38) ausgebildet ist und mindestens ein erstes Rohr (36) mit einem Einlass (36a) zur Aufnahme des Probenahmestromes (A) und einem zur Aerosolsensoranordnung (8) führenden Auslass (36b) und ein neben dem ersten Rohr (36) angeordnetes zweites Rohr (38) aufweist, dessen Einlass (38a) in einem Abstand vom Einlass (36a) des ersten Rohres (36) und bevorzugt in der Nähe des Auslasses (36b) des ersten Rohres (36) angeordnet und an den zweiten Ausgang der Aufteilungseinrichtung (24, 28) angeschlossen ist und dessen Auslass (38b) mit dem ersten Rohr (36) benachbart zu dessen Einlass (36a) kommuniziert, so dass die Fließrichtung im zweiten Rohr (38) entgegengesetzt zur Fließrichtung im ersten Rohr (36) orientiert ist und die Probenahmelanze (34) die Funktion eines nach dem Wärmetauscherprinzip arbeitenden Kühlelementes übernimmt.

**17.** Vorrichtung nach Anspruch 16, **dadurch gekennzeichnet, dass** das zweite Rohr (38) zumindest abschnittsweise das erste Rohr (36) umgibt, wobei bevorzugt das erste Rohr (36) und das zweite Rohr (38) im Wesentlichen koaxial zueinander angeordnet sind.

**18.** Vorrichtung nach Anspruch 15 sowie nach Anspruch 16 oder 17, **dadurch gekennzeichnet, dass** ein Abkühlbehälter (40) zwischen dem Auslass (36b) des ersten Rohres (36) der Probenahmelanze (34) und der Aerosolsensoranordnung (8) geschaltet ist.

## Claims

**1.** Device for measuring the mass concentration of particulate matter in the exhaust of solid fuel combustion devices, comprising at least one aerosol sensor arrangement (8) and an evaluation device (50) to which the aerosol sensor arrangement (8) is connected, wherein the aerosol sensor arrangement (8) comprises at least two sensors (10, 12), one sensor (10) of which is at least one aerosol scattered light sensor and the other sensor (12) of which is at least one aerosol photoemission sensor, and the evaluation device (50) is configured to simultaneously use and evaluate the signals from the sensors (10, 12) of the aerosol sensor arrangement (8) to determine the mass concentration, **characterised in that** upstream of the aerosol sensor arrangement (8) a conditioning device (6) is provided, which has a first input (36a) for receiving a sample flow (A), a second input (38a) and an output (36b) leading to the aerosol sensor arrangement (8), and downstream of the aerosol sensor arrangement (8) a distribution device (24, 28) is provided, which has an input connected to the output of the aerosol sensor arrangement (8), a first output (26) leading into the environment and a second output (30) leading to the second input (38a) of the conditioning device (6), wherein the distribution device (24, 28) distributes the mass flow (D) in a predefined ratio to its two outputs (26, 30), the ratio in the distribution device (24, 28) is selected so that the part flow (E) coming from the first output (26) of the distribution device corresponds essentially to the sample flow (A) input into the input (36a) of the conditioning device (6), and at the first output (26) of the distribution device (24, 28) a mass flow sensor (32) connected to the evaluation device (50) is arranged.

2. Device according to claim 1, **characterised in that** the sensors (10, 12) of the aerosol sensor arrangement (8) are connected in series behind one another and preferably the at least one aerosol photoemission sensor (12) is arranged downstream of the at least one aerosol scattered light sensor (10).

3. Device according to at least one of the preceding claims, **characterised by** a particle filter (44), which is preferably provided downstream of the aerosol arrangement.

4. Device according to claims 2 and 3, **characterised in that** the last downstream sensor (12) of the aerosol sensor arrangement (8) additionally comprises the particle filter (44).

5. Device according to at least one of claims 3 or 4, **characterised in that** the particle filter (44) has an ionisation device (12d), preferably an ultraviolet lamp, for the surface ionisation of the particles and an electrically opposite charged particle collecting device (44b), preferably a Faraday cage, for collecting and depositing the particles, wherein preferably at least one aerosol photoemission sensor (12) comprises the particle filter (44) and a light source (12d), which is provided at the same time as an ionisation device.

6. Device according to at least one of the preceding claims, **characterised in that** the aerosol sensor arrangement has two aerosol scattered light sensors (10a, 10b), the polarisation directions of which are oriented approximately at right angles to one another, wherein preferably the polarisation direction of one aerosol scattered light sensor is oriented approximately parallel to the optical plane, which is spanned by the beam path of the incidental light from a light source and the beam path of the light scattered to a detector.

7. Device according to at least one of the preceding claims, **characterised in that** the evaluation device (50) has means for superimposing, preferably linearly, the signals from the sensors (10, 12) of the aerosol sensor arrangement (8), wherein preferably the superimposing means comprise at least one adder.

8. Device according to at least one of the preceding claims, **characterised in that** downstream of the aerosol sensor arrangement (8) a water vapour absorption device (16), preferably containing silica gel, is provided.

9. Device according to at least one of the preceding claims, **characterised in that** downstream of the aerosol sensor arrangement (8) an absorption device (18), preferably containing activated carbon, is provided for absorbing gaseous hydrocarbons and/or acids.

10. Device according to claims 8 and 9, **characterised in that** the absorption device (18) for absorbing gaseous hydrocarbons and/or acids is provided downstream of the water vapour absorption device (16).

11. Device according to claim 9 or 10, **characterised in that** the distribution device (24, 28) is provided downstream of the absorption device (8).

12. Device according to at least one of the preceding claims, **characterised in that** the distribution device comprises an arrangement of capillaries, which can be exchanged for setting a desired distribution ratio, wherein preferably a first capillary (24) is provided at the first output and a second capillary (28) is provided at the second output (30).

13. Device according to at least one of the preceding claims, **characterised in that** the mass flow sensor (32) comprises a heating element for heating the part mass flow (E) exiting from the first output (26) by means of a defined heat output and a measuring element for measuring the temperature difference.

14. Device according to at least one of the preceding claims, **characterised in that** upstream of the aerosol sensor arrangement (8) at least one cooling element is provided for cooling the mass flow (C) guided into the aerosol sensor arrangement (8).

15. Device according to claim 14, **characterised in that** the conditioning device (6) comprises the at least one cooling element.

16. Device according to claim 15, **characterised in that** the conditioning device (8) has a sampling spear (34), which is in the form of a double or multiple pipe arrangement (36, 38) and comprises at least one first pipe (36) with an inlet (36a) for receiving the sample flow (A) and an outlet (36b) leading to the aerosol sensor arrangement (8) and a second pipe (38) arranged next to the first pipe (36), the inlet (38a) of which is arranged at a distance from the inlet (36a) of the first pipe (36) and preferably in the vicinity of the outlet (36b) of the first pipe (36) and is connected to the second output of the distribution device (24, 28) and its outlet (38b) communicates with the first pipe (36) adjacent to its inlet (36a) so that the flow direction in the second pipe (38) is oriented opposite the flow direction in the first pipe (36) and the sampling spear (34) takes on the function of a cooling element operating according to the heat exchanger principle.

17. Device according to claim 16, **characterised in that** the second pipe (38) at least partly surrounds the first pipe (36), wherein preferably the first pipe (36) and the second pipe (38) are arranged to be essentially coaxial to one another.

18. Device according to claim 15 and according to claim 16 or 17, **characterised in that** a cooling container (40) is connected between the outlet (36b) of the first pipe (36) of the sampling spear (34) and the aerosol sensor arrangement (8).

**Revendications**

1. Dispositif de mesure de concentration massique de poussières fines présentes dans les gaz d'échappement de dispositifs de combustion de matières solides, avec au moins un ensemble de capteurs d'aérosol (8) et un système d'évaluation (50), auquel est raccordé l'ensemble de capteurs d'aérosol (8), dans lequel l'ensemble de capteurs d'aérosol (8) présente au moins deux capteurs (10, 12), dont un capteur (10) est au moins un capteur de lumière diffusée d'aérosol et l'autre capteur (12) est au moins un capteur de photoémission d'aérosol, et le système d'évaluation (50) est réalisé pour utiliser et évaluer dans le même temps les signaux provenant des capteurs (10, 12) de l'ensemble de capteurs d'aérosol (8) pour déterminer la concentration massique, **caractérisé en ce qu'**un système de conditionnement (6), qui présente une première entrée (36a) pour recevoir un flux d'échantillonnage (A), une deuxième entrée (38a) et une sortie (36b) menant vers l'ensemble de capteurs d'aérosol (8) est prévu en amont devant l'ensemble de capteurs d'aérosol (8) et un système de répartition (24, 28), qui présente une entrée reliée à la sortie de l'ensemble de capteurs d'aérosol (8), une première sortie (26) menant dans l'environnement et une deuxième sortie (30) menant vers la deuxième entrée (38a) du système de conditionnement (6), est prévu en aval après l'ensemble de capteurs d'aérosol (8), dans lequel le système de répartition (24, 28) répartit le flux massique (D) selon un rapport prédéfini sur ses deux sorties (26, 30), le rapport est choisi dans le système de répartition (24, 28) de telle sorte que le flux partiel (E) sortant de la première sortie (26) du système de répartition corresponde sensiblement au flux d'échantillonnage (A) introduit dans l'entrée (36a) du système de conditionnement (6), et un capteur de flux massique (32) raccordé au système d'évaluation (50) est disposé sur la première sortie (26) du système de répartition (24, 28).

2. Dispositif selon la revendication 1, **caractérisé en ce que** les capteurs (10, 12) de l'ensemble de capteurs d'aérosol (8) sont branchés les uns derrière les autres de manière alignée et de manière préférée l'au moins un capteur de photoémission d'aérosol (12) est disposé en aval derrière l'au moins un capteur de lumière diffusée d'aérosol (10).

3. Dispositif selon au moins l'une quelconque des revendications précédentes, **caractérisé par** un filtre à particules (44), qui est prévu de manière préférée en aval derrière l'ensemble de capteurs d'aérosol.

4. Dispositif selon les revendications 2 et 3, **caractérisé en ce que** le dernier capteur (12) en aval de l'ensemble de capteurs d'aérosol (8) présente en supplément le filtre à particules (44).

5. Dispositif selon au moins l'une quelconque des revendications 3 ou 4, **caractérisé en ce que** le filtre à particules (44) présente un système d'ionisation (12d), de préférence une lampe ultraviolette, pour l'ionisation superficielle des particules et un système de piégeage de particules (44b) à charge électrique opposée, de préférence une cage de Faraday, pour piéger et déposer les particules, dans lequel de manière préférée au moins un capteur de photoémission d'aérosol (12) présente le filtre à particules (44) ainsi qu'une source de lumière (12d), qui est prévue dans le même temps en tant que système d'ionisation.

6. Dispositif selon au moins l'une quelconque des revendications précédentes, **caractérisé en ce que** l'ensemble de capteurs d'aérosol présente deux capteurs de lumière diffusée d'aérosol (10a, 10b), dont les directions de polarisation sont orientées à peu près à angle droit les unes par rapport aux autres, dans lequel de préférence la direction de polarisation d'un capteur de lumière diffusée d'aérosol est orientée à peu près de manière parallèle par rapport au plan optique, qui est formé par le chemin optique de la lumière incidente provenant d'une source de lumière et le chemin optique de la lumière diffusée vers un détecteur.

7. Dispositif selon au moins l'une quelconque des revendications précédentes, **caractérisé en ce que** le système d'évaluation (50) présente des moyens de superposition, de préférence linéaire, des signaux provenant des capteurs (10, 12) de l'ensemble de capteurs d'aérosol (8), dans lequel de manière préférée les moyens de superposition présentent au moins un additionneur.

8. Dispositif selon au moins l'une quelconque des revendications précédentes, **caractérisé en ce qu'**un système d'absorption de vapeur d'eau (16) contenant de préférence du silicagel est prévu en aval derrière l'ensemble de capteurs d'aérosol (8).

9. Dispositif selon au moins l'une quelconque des revendications précédentes, **caractérisé en ce qu'**un système d'absorption (18) contenant de préférence du charbon actif pour l'absorption d'hydrocarbures et/ou d'acides gazeux est prévu en aval derrière l'ensemble de capteurs d'aérosol (8).

10. Dispositif selon les revendications 8 et 9, **caractérisé en ce que** le système d'absorption (18) pour l'absorption d'hydrocarbures et/ou d'acides gazeux est prévu en aval derrière le système d'absorption de vapeur d'eau (16).

11. Dispositif selon la revendication 9 ou 10, **caractérisé en ce que** le système de répartition (24, 28) est prévu en aval derrière le système d'absorption (8).

12. Dispositif selon au moins l'une quelconque des revendications précédentes, **caractérisé en ce que** le système de répartition présente un ensemble de capillaires, qui peuvent être remplacés pour régler un rapport de répartition souhaité, dans lequel de préférence un premier capillaire (24) est prévu sur la première sortie et un deuxième capillaire (28) est prévu sur la deuxième sortie (30).

13. Dispositif selon au moins l'une quelconque des revendications précédentes, **caractérisé en ce que** le capteur de flux massique (32) présente un élément chauffant pour chauffer le flux massique partiel (E) sortant de la première sortie (26) au moyen d'une puissance de chauffage définie et un élément de mesure pour la mesure de la différence de température.

14. Dispositif selon au moins l'une quelconque des revendications précédentes, **caractérisé en ce qu'**au moins un élément de refroidissement pour refroidir le flux massique (C) acheminé dans l'ensemble de capteurs d'aérosol (8) est prévu en aval devant l'ensemble de capteurs d'aérosol (8).

15. Dispositif selon la revendication 14, **caractérisé en ce que** le système de conditionnement (6) présente l'au moins un élément de refroidissement.

16. Dispositif selon la revendication 15, **caractérisé en ce que** le système de conditionnement (8) présente une lance d'échantillonnage (34), qui est réalisée en tant qu'ensemble à double tube ou à tubes multiples (36, 38) et présente au moins un premier tube (36) avec une admission (36a) pour recevoir le flux d'échantillonnage (A) et une évacuation (36b) menant vers l'ensemble de capteurs d'aérosol (8) et un deuxième tube (38) disposé à côté du premier tube (36), dont l'admission (38a) est disposée à une distance de l'admission (36a) du premier tube (36) et de manière préférée à proximité de l'évacuation (36b) du premier tube (36) et est raccordée à la deuxième sortie du système de répartition (24, 28) et dont l'évacuation (38b) communique avec le premier tube (36) de manière adjacente par rapport à son admission (36a) de sorte que la direction d'écoulement dans le deuxième tube (38) soit orientée à l'opposé de la direction d'écoulement dans le premier tube (36) et la lance d'échantillonnage (34) assure la fonction d'un élément de refroidissement en fonctionnement selon le principe de l'échangeur de chaleur.

17. Dispositif selon la revendication 16, **caractérisé en ce que** le deuxième tube (38) entoure au moins par endroits le premier tube (36), dans lequel de manière préférée le premier tube (36) et le deuxième tube (38) sont disposés sensiblement de manière coaxiale l'un par rapport à l'autre.

18. Dispositif selon la revendication 15 ainsi que selon la revendication 16 ou 17, **caractérisé en ce qu'**un contenant de refroidissement (40) est branché entre l'évacuation (36b) du premier tube (36) de la lance d'échantillonnage (34) et l'ensemble de capteurs d'aérosol (8).

Fig. 1

EP 2 502 049 B1

**Fig. 2**

**Fig. 3**

**Fig. 4**

EP 2 502 049 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007000710 A2